## Europäisches Patentamt
## European Patent Office
## Office européen des brevets

(11) Veröffentlichungsnummer: **0 182 000**
**B1**

(12)
# EUROPÄISCHE PATENTSCHRIFT

(45) Veröffentlichungstag der Patentschrift:
31.05.89

(51) Int. Cl.⁴: **B 01 D 46/24**

(21) Anmeldenummer: 85107516.8

(22) Anmeldetag: 18.06.85

(54) Zyklon-Filter mit Ganzmetall-Tandem-Filterkerze.

(30) Priorität: 18.06.84 DE 3422592

(43) Veröffentlichungstag der Anmeldung:
28.05.86 Patentblatt 86/22

(45) Bekanntmachung des Hinweises auf die Patenterteilung:
31.05.89 Patentblatt 89/22

(84) Benannte Vertragsstaaten:
AT BE CH FR GB IT LI LU NL SE

(56) Entgegenhaltungen:
WO-A-83/03556
DE-A-3 022 203
DE-U-1 817 985
DE-U-7 726 486
FR-A-2 514 669

(73) Patentinhaber: Titus, Hans- Joachim, Dipl.- Ing.,
Andreas- Hofer Str. 14, A-6330 Kufstein (AT)

(72) Erfinder: Titus, Frank, Am Katzenpfad 4, D-6148
Heppenheim (DE)

(74) Vertreter: Raeck, Wilfrid, Dipl.- Ing., Moserstrasse
8, D-7000 Stuttgart 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Abscheider mit Filter zum Abtrennen von Feststoff-Produkten aus einer insbesondere gasförmigen Förderströmung, mit einem Abscheidergehäuse, das einen oberen tangentialen Einlaßstutzen für die Förderstömung enthält und in das von oben ein mehrere rohrförmige Filterelemente umgebendes, nach unten offenes Tauchrohr hineinragt, ferner mit einem die Filterelemente haltenden Rohrboden, der das Tauchrohr nach oben von einer einen Auslaß enthaltenden Reingaskammer trennt, und mit von der Reingaskammer aus in die Filterelemente gerichteten, mit Druckgas beaufschlagbaren Reinigungsdüsen.

Bei einem aus der FR-A-2 514 669 bekannten Abscheider der vorbezeichneten Art bestehen die von dem Tauchrohr umfaßten Filterelemente aus an ihrem oberen offenen Ende im Rohrboden befestigten Schläuchen oder Säcken, deren unteres Ende geschlossen ist. In Draufsicht auf den Rohrboden sind die Schläuche gruppenweise zu mehreren parallelen Reihen dicht beieinander angeordnet. Oberhalb jeder dieser Reihen befindet sich eine an einen Druckgasbehälter angeschlossene Sammelleitung, von der aus in die einzelnen Schläuche ragende Reinigungsdüsen ausgehen. Nach einer bestimmten Betriebsdauer werden die Sammelleitungen über zeitgesteuerte Ventile von den Druckgasbehältern aus mit Druckstößen beaufschlagt, damit die Filterelemente wieder gasdurchlässig und die außen von der Rohrgasseite aus dort festgesetzten Staubpartikel abgelöst werden, so daß sie in in einen darunter angeordneten Zyklon-Bunker fallen. Eine Abscheider- und Filter-Anordnung dieser bekannten Art besitzt nur eine verhältnismäßig geringe Filterkapazität und ist deshalb eher zur Reinigung von Luft als zur Abscheidung von Feststoff-Produkten aus Trägergasströmungen geeignet.

Weiterhin ist aus der DE-U-7 726 486 ein vorzugsweise für den Berg- und Tunnelbau bestimmter kleinbauender Filter bekannt, bei dem die zu filternde staubhaltige Luft einem das Gerät umgebenden rohrförmigen Rohgasmantel zugeführt wird, dessen Innenwand aus einem perforiertes Anströmrohr besteht. Im oberen Bereich innerhalb des Anströmrohres befindet sich ein Doppelmantel-Topffilter, der im Querschnitt einem umgekehrten U entspricht und nach oben in einen Reingaskanal mündet. Von oben ragen in den Topffilter mehrere Reinigungsdüsen hinein, um den angelagerten Staub zu lösen und durch ein Leitrohr einen Staubfördertrog zuzuführen. Das Leitrohr bildet die untere Fortsetzung des perforierten Anströmrohrs des Rohgasmantels.

Der Erfindung liegt die Aufgabe zugrunde, einen Abscheider mit Filter der eingangs bezeichneten Art dahingehend zu verbessern, daß eine kleinbauende Anordnung mit einem gegenüber dem Stand der Technik stark erhöhten Abscheidungsgrad und hoher möglicher Filterflächenbelastung geschaffen wird, und die ohne Verschmutzungsgefahr einen schnellen Übergang von der Reinigung bzw. Verarbeitung eines Produktes zu einem anderen Produkt ermöglicht, ohne die Gefahr der Kontamination des später verarbeitenden Produktes.

Erfindungsgemäß wird diese Aufgabe dadurch gelöst, daß das Tauchrohr 24 und die Filterelemente 30 über ihre gesamte Länge in den Abscheiderbehälter 28 hineinragen, daß jedes Filterelement zwei zueinander konzentrische, aus Metallgewebe bestehende Filterzylinder mit einem dazwischen gebildeten, am unteren Ende geschlossenen Ringraum aufweist, daß der nach oben durch den Rohrboden fortgesetzte Ringraum in eine im Querschnitt diffusorartig erweiterte Ringöffnung übergeht, und daß jeweils mehrere der als Treibdüsen ausgebildeten Reinigungsdüsen in die obere Ringöffnung jedes Filterelementes hineinragen.

Vorteile der vorgeschlagenen Bauart sind vor allem darin zu sehen, daß außer einer wirksamen Vorabscheidung im Zyklonverfahren, bei dem die erzeugte Zykonströmung den Bereich der Filterkerzen unbeeinflußt läßt, eine hohe Filterkapazität erreicht wird. Dazu tragen die mit großer Oberfläche ausgeführten Metallfilterkerzen, der große Abströmquerschnitt für Reingas im Ringspalt und in der oberen Ringöffnung sowie die wirksame Abreinigung der Metallfilter mit mehreren Düsen in der Ringöffnung bei.

Weitere Merkmale und Vorteile ergeben sich aus den Unteransprüchen 2 bis 7. In der nachfolgenden Beschreibung sind Ausführungsbeispiele gemäß der Erfindung im Unterschied zum Stand der Technik erläutert. Es zeigen

| Fig. 1 | eine Abscheider-Filteranordnung nach dem Stand der Technik, |
| Fig. 2 | eine teilweise geschnittene schematische Seitenansicht einer bevorzugten Ausführungsform der erfindungsgemäßen Abscheider-Filters, |
| Fig. 3 | einen schematischen Schnitt durch eine bekannte Metall-Filterkerze mit darüber angeordneter Laval-Reinigungsdüse, |
| Fig. 4 | einen gegenüber Fig. 2 vergrößerten Teilquerschnitt durch eine Filterkerze gemäß der Erfindung im Bereich des oberen Rohrbodens, |
| Fig. 5 - 7 | schematische waagerechte Schnitte durch verschiedene Ausführungsbeispiele von Abscheiderbehälter in Verbindung mit von einem Tauchrohr umgebenen Filterkerzen. |

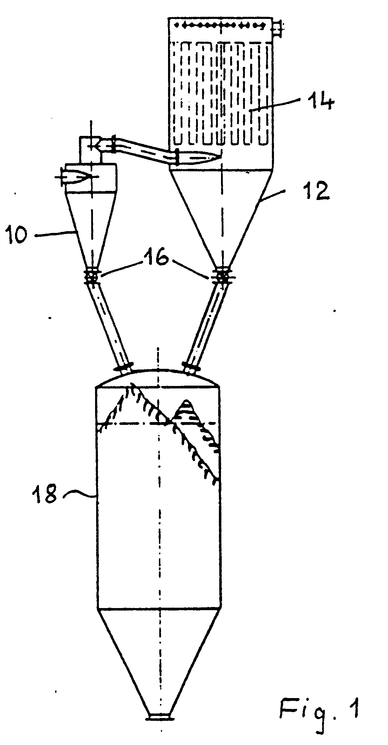

Zur Abscheidung von Feststoffpartikeln aus Gasströmungen sind gemäß dem Stand der Technik entsprechend Fig. 1 hintereinandergeschaltete Zyklonabscheider 10, 12 bekannt, die das abgeschiedene Produkt in einen darunter befindlichen Bunker 18 leiten. Die Feinstreinigung des Trägergases erfolgt durch ein Staubfilter 14, das dem Zyklon 12 nachgeschaltet ist. Um Unterströmungen zu vermeiden, sind beide Zyklone mit störanfälligen Zellenrädern 16 am Produktausgang versehen.

Beim nachgeschalteten Filter 14 stömt das Gas unterhalb der Filterzone tangential ein. Dadurch entsteht der Nachteil, daß Bunkerhöhe für die Einströmung verloren geht und das von oben abgereinigte Produkt durch eine Rotationsströmung hindurchfallen muß mit der Folge, daß ca. 50 % der herabfallenden Staubpartikel wieder mit hochgerissen werden und sich dadurch die Gasstaubbeladung erhöht und die spezifische Filterflächenbelastung veringert. Ein weiterer Nachteil besteht darin, daß mit steigender Produktsäule im Bunker auf Grund der starken Rotationsströmung das Produkt nach dem Windhosenprinzip wieder aufgewirbelt wird und erneut in die Filterzone gelangt.

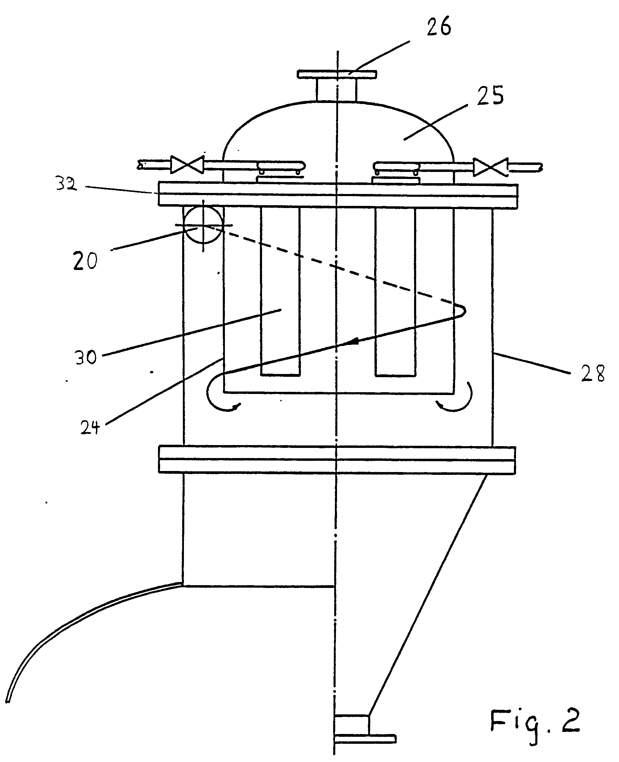

Diese vorbeschriebenen Nachteile werden durch die erfindungsgemäße Kombination von Abscheider und Filter gemäß Fig. 2 vermieden. Ein tangential angeordnetes Eintrittsrohr 20 mündet im obersten Teil eines Abscheiderbehälters 28. Mittig oder auch exzentrisch angeordnet sind die Fitlerelemente 30, die nach dem Zyklonprinzip von ein Tauchrohr 24 umgeben sind. Über die Reingaskammer 25 strömt das vom Staub gereinigte Abgas durch den Stutzen 26 aus dem Filter aus.

Durch das tangentiale Eintrittsrohr 20 gelangt das Staubgasgemisch mit hoher Geschwindigkeit in den zylindrischen Abscheiderbehälter 28. Durch das die Filterelemente umgebende Tauchrohr 24 wird das Gas gezwungen, seine dynamische Energie in statische umzuwandeln und die Strömungsgeschwindigkeit auf ein Minimum zu reduzieren. Nach Beendigung der zyklonartigen Rotationsströmung tritt das beruhigte Gas allseitig von unten nach einer 180°-Umlenkung in die Filterzone innerhalb des Tauchrohres 24 ein. Dadurch wird erreicht, daß im Gegensatz zur bekannten Einleitung des Gases unterhalb der Filterzone das Produkt nicht durch die erwähnte Rotationsströmung fallen muß und von dieser wieder hochgerissen wird. Die Rohgasstaubbeladung in der Filterzone ist gegenüber herkömmlichen Filtern wesentlich geringer, die zyklonartige Vorabscheidung gegenüber der reinen Zyklonanordnung schlechter. Diese schlechtere Vorabscheidung hat für die Filtration nur Vorteile, da nicht nur die Feinstäube in die Filterzone gelangen, sondern auch Mischkristalle, was eine wesentlich höhere Filterflächenbelastung und eine wesentlich bessere Rückreinigung ermöglicht.

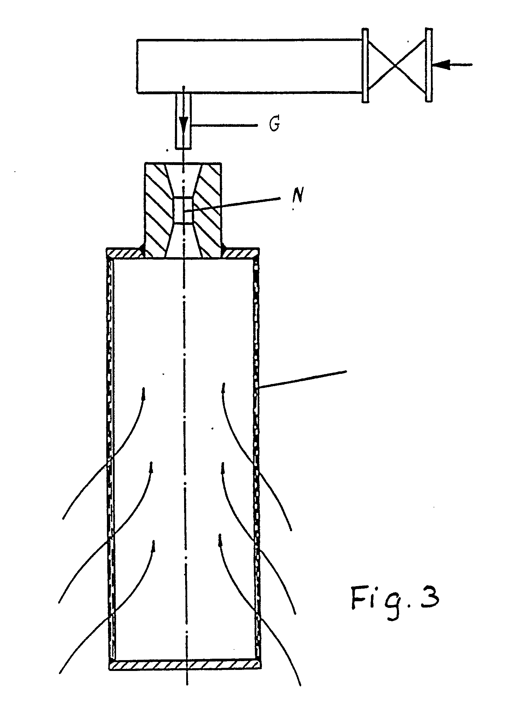

Auf Grund verschiedener Nachteile bekannter Textilfilter war es erforderlich, eine Entwicklung vorzunehmen, die zum Ganzmetall-Filter geht. Versuche mit marktüblichen Metall-Filterkerzen nach Fig. 3 ergaben zwar mindestens gleichgute bis bessere Abscheidegrade als mit Textilfiltern, die spezifische Filterflächenbelastung konnte jedoch nur unwesentlich erhöht werden, ca. auf 3 cbm/qm x min. (Textilfilter ca. 2 cbm/qm x min.)

Grund der nur geringen Steigerung ist nicht das Filtermaterial, sondern die für die Rückreinigung erforderliche Treibdüse N. Das Abreinigungsgas wird über ein Düsenrohr G für die Rückreinigung durch eine Laval-Düse geblasen, da das Metallfiltermaterial nicht walken und deshalb nur von der mitgerissenen Luft zurückgespült werden kann. Diese Laval-Düse N ist in der Regel 12.7 mm (1/2″) bis 25.4 mm (1″) im Durchmesser, womit sie über die mit max. 20 m/s ausströmende Gasmenge die Filterflächengröße und damit die spezifische Filterflächenbelastung begrenzt. Obwohl Metallgewebe speziell im Pharmabereich enorme Vorteile hat, war es in der bekannten Form aus Kostengründen nicht einsetzbar.

Gemäß der Erfindung wurde deshalb eine Filterkerze entwickelt, deren Dimensionierung sowohl in Flächen als auch in spezifischer Filterflächenbelastung nicht durch die Treibdüse N (Fig. 3) begrenzt ist, sondern tatsächlich nur durch die Anströmgeschwindigkeit des Filtergewebes, die Druckdifferenz zwischen Rohgas- und Reingasseite und somit die der spezifischen Filterflächenbelastung.

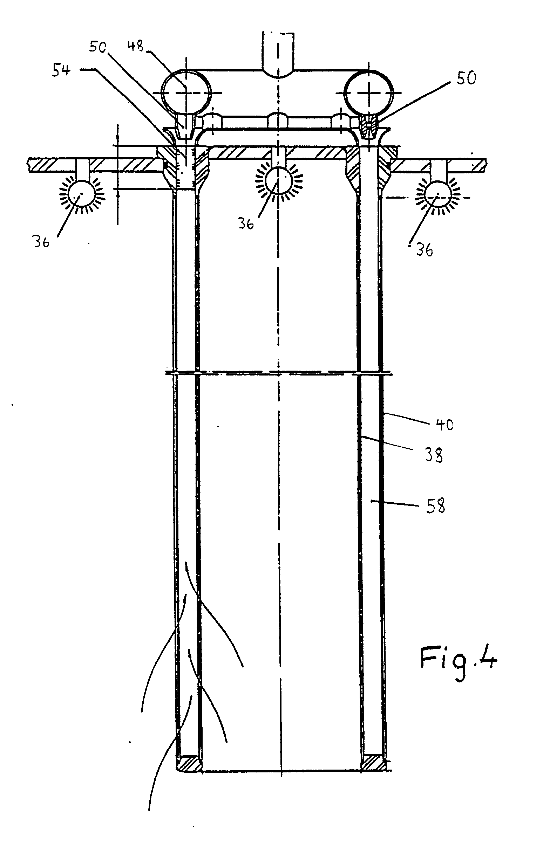

Fig. 4 zeigt eine Filterkerze gemäß der Erfindung, die aus zwei konzentrischen Filterzylindern 38, 40 besteht. Das zu reinigende Gas kann sowohl von innen, als auch von außen in den Ringspalt 58 strömen und durch den großen Querschnitt der diffusorartig erweiterten Ringöffnung 54 als Reingas austreten.

Bei z. B. 5-fach vergrößerter Filterfläche gegenüber der bekannten Einfachkerze gemäß Fig. 3 ergibt sich ein 20-fach vergrößerter Querschnitt der oberen Ringöffnung 54 gegenüber der Laval-Düse. Die spezifische Filterflächenbelastung in cbm/qm x min kann somit bei gleichem Druckverlust 4-fach so hoch sein wie bei der Einfachkerze. Gegenüber dem Textilgewebe wächst die spezifische Filterflächenbelastung sogar um das 10-fache. Durch die damit wesentlich kleinere Filterfläche reduzieren sich die Kosten für das Tandemkerzenfilter wesentlich, wobei hinzukommt, daß das Metallfilter nicht ausgewechselt werden muß bei Produktwechsel, sondern mit Flüssigkeit gespült, bedüst, bedampft oder im Umlauf gewaschen werden kann, da sich im Metallfilter keinerlei Feinstpartikel festsetzen können wie im Textilfilter.

Die Rückreinigung erfolgt über eine Ringleitung 48, in der mehrere, z. B. 6 oder 8 Reinigungsdüsen 50 senkrecht eingeschweißt sind, die in die Kreisring-Diffusoröffnung den Reinigungsdruckgasstoß injizieren und die Tandemkerze vom Staubbelag befreien.

Zur Verbesserung des Wirkungsgrades der Injektionswirkung beim Druckgasstoß durch die Treibdüse trägt die Diffusoröffnung bei, indem sie ein zusätzliches Mitreißen der Umgebungsluft in die Ringöffnung ermöglicht.

Die Tandemkerze kann sowohl nur mit Außenzylinder oder nur mit Innenzylinder betrieben werden; wirtschaftlicherweise jedoch mit Innen- und Außenzylinder aus einem Metallfiltergewebe, das aus Festigkeitsgründen aus verschiedenen Lagen zusammengesintert ist, obwohl es sich hierbei um gewebtes Material handelt.

Um bei Produktwechsel Kontamination zu vermeiden, können gemäß Fig. 4 zusätzlich Sprühköpfe 36 angeordnet werden, die sowohl zwischen den Filterkerzen als auch innerhalb der Filterkerze Produktrückstände durch Druckspülung abwaschen können.

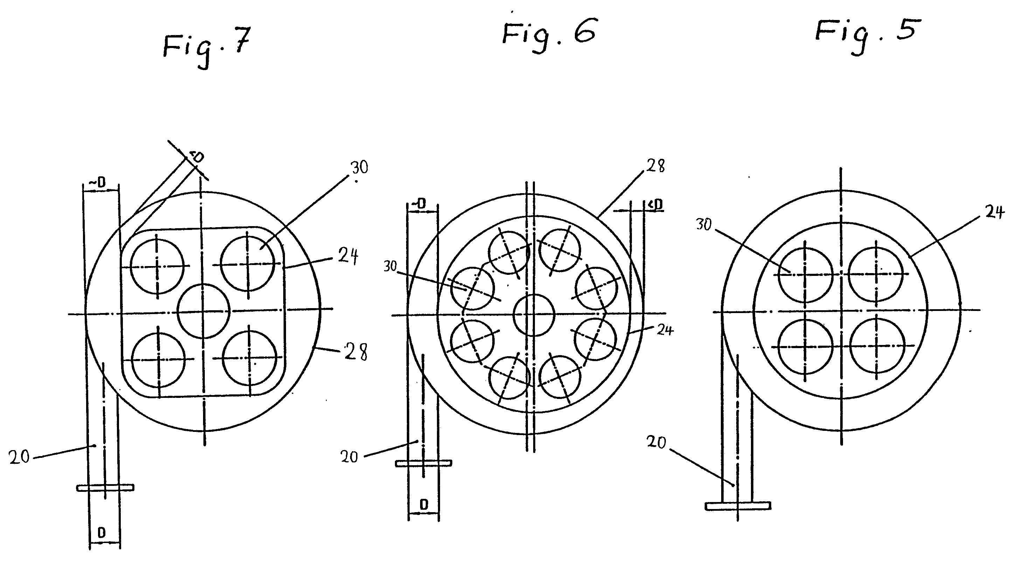

Fig. 5 zeigt eine konzentrische Anordnung von zylindrischem Abscheiderbehälter 28 und Tauchrohr 24, ferner das tangentiale Eintrittsrohr 20 sowie die Filterkerzen 30.

Fig. 6 zeigt eine exzentrische Anordnung zwischen dem Abscheiderzylinder 28 und dem Tauchrohr 24, wobei der Abstand zwischen Abscheiderzylinder und Tauchrohr am tangentialen Eintritt 20 vorzugsweise etwa dessen Durchmesser D entspricht, während der gegenüberliegende Abstand wesentlich kleiner als D ausgeführt ist. Dies führt zu wesentlichen Vorteilen bei der Reduzierung der dynamischen Energie wie auch des Platzbedarfs.

Die Zahl der Filterkerzen ist auf Grund der zu reinigenden Rohgasmenge und der höheren spezifischen Filterflächenbelastung geringer als die bei Stoff-Filtern bzw. Einfach-Metallkerzen. Die Baugröße des Filters reduziert sich damit sowohl im Durchmesser als auch in der Bauhöhe wesentlich, damit auch der Abreinigungsmechanismus einschließlich der Gasventile.

Abb. 7 zeigt das Tauchrohr 24 in viereckiger Form, wobei aufgrund der 4-fach wechselnden Abstände zwischen Tauchrohr 24 und Behälter-Zylinder, die für den Trocknungseffekt erwünschte Differenzströmung zwischen Produktkristall und Gasstrom besonders effektiv erzeugt wird.

## Patentansprüche

1. Abscheider mit Filter zum Abtrennen von Feststoff-Produkten aus einer gasförmigen Förderströmung, mit einem Abscheiderbehälter (28) das einen oberen tangentialen Einlaßstutzen (20) für die Förderströmung enthält und in das von oben ein mehrere rohrförmige Filterelemente (30) umgebendes nach unten offenes Tauchrohr (24) hineinragt, mit einem die Filterelemente haltenden Rohrboden (32), der das Tauchrohr nach oben von einer einen Auslaß enthaltenden Reingaskammer (25) trennt, und mit von der Reingaskammer aus in die Filterelemente gerichteten, mit Druckgas beaufschlagbaren Reinigungsdüsen (50),
dadurch gekennzeichnet,
- daß das Tauchrohr (24) und die Filterelemente (30) über ihre gesamte Länge in den Abscheiderbehälter (28) hineinragen,
- daß jedes Filterelement (30) zwei zueinander konzentrische, aus Metallgewebe bestehende Filterzylinder (38, 40) mit einem dazwischen gebildeten, am unteren Ende geschlossenen Ringraum (58) aufweist,
- daß der nach oben durch den Rohrboden (32) fortgesetzte Ringraum (58) in eine im Querschnitt diffusorartig erweiterte Ringöffnung (54) übergeht,
- und daß jeweils mehrere der als Treibdüsen ausgebildeten Reinigungsdüsen (50) in die obere Ringöffnung (54) jedes Filterelementes hineinragen.

2. Abscheider nach Anspruch 1, dadurch gekennzeichnet, daß oberhalb jedes Filterelementes (30) in der Reingaskammer (25) eine an eine Sammelleitung angeschlossene Ringleitung vorgesehen ist, von der aus jeweils mehrere Reinigungsdüsen (50) für ein Filterelement ausgehen.

3. Abscheider nach Anspruch 1 oder 2, dadurch gekennzeichnet, daß sowohl innerhalb als auch außerhalb jedes Filterelementes (30) Waschdüsen (36) angeordnet sind, die bei Produktwechsel eine oberflächliche Reinigung gewährleisten.

4. Abscheider nach einem der vorhergehenden Ansprüche, dadurch gekennzeichnet, daß die Filterelemente (30) über die Reinigungsdüsen (50) mit Reinigungsflüssigkeit im Gegenstrom gewaschen werden können.

5. Abscheider nach einem der vorhergehenden Ansprüche, dadurch gekennzeichnet, daß das die Filterelemente über ihre Höhe vollständig umgebende Tauchrohr (24) verschiedene geometrische Formen haben kann, wie rechteckig, vieleckig, rund oder oval.

6. Abscheider nach einem der vorhergehenden Ansprüche. daduch gekennzeichnet, daß bei eckiger Ausführung des Tauchrohres (24) unterschiedliche Entfernungen zwischen Filterelement und Tauchrohr zwecks Reduzierung der dynamischen Strömungsenergie und dauernder Änderung der Differenzströmung zwischen Feststoffpartikeln und Gasstrom vorgesehen sind, um so bei Konvektionstrocknung einen zusätzlichen Trocknungseffekt zu erzielen.

7. Abscheider nach einem der vorhergehenden Ansprüche, dadurch gekennzeichnet, daß die inneren und äußeren Filterflächen der Filterelemente (30) nicht nur zylindrisch, sondern innen und/oder außen über die Längsachse konisch, im Querschnitt oval, elliptisch oder in anderen geometrischen Formen ausgeführt sein können.

## Claims

1. Separator including filter for separating solid particle products from a gaseous conveying flow, comprising a separator container (28) including an upper tangential infeed pipe (20) for the conveying flow, and into which an immersion tube (24) open at its lower end extends from above and encircling a plurality of tubelike filter elements (30),

a tube plate (32) supporting said filter elements and dividing the immersion tube (24) at its upper portion from a purified gas chamber (25) which includes an outlet,

and cleaning nozzles (50) disposed in the purified gas chamber, directed into the filter elements, and adapted to be loaded by pressurized gas,

characterized in

- that the immersion tube (24) and the filter elements (30) extend over their entire length within the separator container (28),

- that each filter element (30) comprises two filtering cylinders (38, 40) each consisting of metal fabric and concentric relative to each other to form an annualar space (58) therebetween which is closed at its lower end,

- that the annular space (58) extending upwardly through said tube plate (32) converts into a annular opening (54) of enlarged diffusor-like cross-section,

- and in that a plurality of said cleaning nozzles (50) acting as a propulsion nozzles extends into the upper annular opening (54) of each filtering element.

2. Separator as in claim 1, characterized in that in the purified gas chamber (25) above of each filter element (30) an annular pipe is provided, which is connected to a manifold pipe and each of which includes a plurality of cleaning nozzles (90) for a filter element (30).

3. Separator as in claim 1 or 2, characterized in that within and outside of each filter element (30) washing nozzles (36a) are disposed allowing superficial cleaning during a change of the product to be handled.

4. Separator as in one of the preceding claims, characterized in that the filter elements (30) can be washed by means of the cleaning nozzles (50) by using cleaning liquid at counter flow operation.

5. Separator as in one of the preceding claims, characterized in that the immersion tube (24) encircling the filter elements over their entire length may have various geometric forms, like rectangular, polygonal, circular or oval.

6. Separator as in one of the preceding claims, characterized in that in a cornered embodiment of the immersion tube (24) different distances between filter element and immersion tube are provided in order to reduce the dynamic flow energy and to permanently change the difference of flow between the solid particles and the gas flow, in order to achieve an additional drying effect during convection drying.

7. Separator as in one of the preceding claims, characterized in that the inner and the outer filter surfaces of the filter elements (30) may be not only cylindrical, but also conical at the inner and/or outer side of the filter along their longitudinal axis, and may have a cross-section of oval, elliptic or any other geometrical form or shape.

## Revendications

1. Séparateur avec des filtres pour séparer des produits de matière solide d'un courant transporteur gazeux, composé d'un récipient séparateur (25) contenant une tubulure (20) tangentiale supérieure pour l'admission du courant transporteur et une tube plongeur (24) ouverte vers la partie basse, prolongant d'en haut dans le séparateur et entourant plusieurs éléments filtrants sous forme tubulaire,

d'une plaque tubulaire (32) supportant les éléments filtrants et divisant ladite tube plongeur vers le haut d'une chambre de gaz épuré (25),

et des buses de nettoyage disposées dans la chambre de gaz épuré, dirigées vers l'intérieur des éléments filtrants, et adaptées d'être alimentées de gaz comprimé,

caractérisé en ce

- que le tube plongeur (24) et les elements filtrants (30) étendent par toute leur longeur dans le récipient séparateur (28),

- que chaque élément filtrant (30) se compose de deux cylindres filtrants (38, 40) du tissu metallique concentrique l'un à l'autre, et formant une espace annulaire entre eux fermée à sa partie basse,

- que ladite espace annulaire (58) continuée vers le haut à travers la plaque tubulaire (32) se transforme en une ouverture annulaire (54) élargie en forme diffuseur,

- et en ce que plusieurs desdites buses de nettoyage (50) formant tuyères de propulsion se prolongent à travers l'ouverture annulaire (54) supérieur de chaque élément filtrant.

2. Séparateur selon la revendication 1, caractérisé en ce que dans la chambre de gaz épuré (25) au-dessus de chaque élément filtrant (30) un conduit annulaire est raccordé à un conduit principale et muni de plusieurs tuyères de nettoyage (50) pour chaque élément filtrant.

3. Séparateur selon revendications 1 ou 2, caractérisé en ce que des tuyères de lavage (36) sont disposées à l'interieur et à l'exterieur de chaque élément filtrant (30) produisant une nettoyage superficielle pendant le change de produit.

4. Séparateur selon une des revendications précédentes, caractérisé en ce que les éléments filtrants (30) sont adaptés d'être laver en operation contre courant à l'aide de liquide de nettoyage par lesdites tuyères de nettoyage (50).

5. Séparateur selon une des revendications précédentes, caractérisé en ce que la tube plongeur (24) entourant toute la longeur des éléments filtrants peut avoir des formes geométriques diverses, comme rectangulaire, polygonel, circulaire ou ovale.

6. Séparateur selon une des revendications précédentes, caracterisé en ce qu'à l'éxécution de la tube plongeur (24) en forme angulaire on prevoit distances différentes entre des éléments filtrants et le tube plongeur (24) afin de réduir l'énergie dynamique des fluides et afin de changer en permanence le courant différentiel entre des particules solides et le courant gazeux, pour achever un effet de séchage additionel pendant le séchage de convection.

7. Séparateur selon une des revendications précédentes, caractérisé en ce que les surfaces filtrantes intérieurs et extérieurs des éléments filtrants (30) peuvent avoir non seulement une forme cylindrique, mais aussi à l'intérieur et/ou à l'extérieur une forme conique par rapport à l'axe longitudinal, et ovale, elliptique ou des autres formes geométriques en coupe transversale.

Fig. 1

Fig. 2

G

N

Fig. 3

Fig.4

Fig. 5

Fig. 6

Fig. 7